# EUROPÄISCHE PATENTSCHRIFT

(11) **EP 0 814 966 B1**
(45) Veröffentlichungstag und Bekanntmachung des Hinweises auf die Patenterteilung: **25.11.1998**
(21) Anmeldenummer: 96907304.8
(22) Anmeldetag: 25.03.1996
(51) Int. Cl.: B60J 5/04

(54) **ZWEISCHALIGE FAHRZEUGTÜR MIT EINEM AUF EINER TRÄGERPLATTE VORMONTIERTEN DOPPELSTRÄNGIGEN SEILFENSTERHEBER**
DOUBLE-WALLED VEHICLE DOOR WITH TWIN-CABLE WINDOW RAISER PREFITTED ON A BASE PLATE
PORTIERE DOUBLE-CLOISON DE VEHICULE, AVEC REMONTE-GLACE A CABLE DOUBLE PREMONTE SUR UNE PLAQUE D'APPUI

(30) Priorität: 25.03.1995 DE 19511105
(43) Veröffentlichungstag der Anmeldung: 07.01.1998
(73) Patentinhaber: Brose Fahrzeugteile GmbH & Co. KG, 96450 Coburg (DE)
(72) Erfinder: SZERDAHELYI, Ferenc, D-96450 Coburg (DE); PLEISS, Eberhard, D-96253 Untersiemau (DE)
(74) Vertreter: Müller, Wolfram Hubertus, Dipl.-Phys.
(86) Internationale Anmeldenummer: DE9600552
(87) Internationale Veröffentlichungsnummer: WO9630226

(56) Entgegenhaltungen:
- EP-A- 0 405 159
- DE-A- 4 343 254

## Beschreibung

Die Erfindung betrifft eine zweischalige Fahrzeugtür gemäß dem Oberbegriff des Patentanspruchs 1 mit einem auf einer Trägerplatte vormontierten doppelsträngigen Seilfensterheber und ist besonders vorteilhaft in Verbindung mit einer modular aufgebauten Fahrzeugtür einsetzbar, wobei die Trägerplatte dichtend einen Ausschnitt im Türinnenblech abdecken soll.

Aus der EP 0 420 617 B1 ist eine Türfensterkassette zum Einpassen in eine Fahrzeugtürkonstruktion bekannt, die aus einer die Fensterscheibe umschließenden Rahmen- und Abdichtungsanordnung mit sich nach unten erstreckenden, seitlichen, kanalartigen Profilen besteht. In diese Profile ist eine Platte eingeschoben, welche die Umlenkrollen für einen doppelsträngigen Seilfensterheber sowie die damit verbundene Fensterscheibe trägt.

Die beschriebene technische Lösung bietet zwar eine für sich vorprüfbare Einheit, jedoch besitzt diese den Nachteil, daß bei ihrer Einführung durch den Spalt im Türschacht wegen der sehr begrenzten Platzverhältnisse keine die Höhe der Türfensterkassette wesentlich beeinträchtigenden Bauteile oder Baugruppen vormontiert werden können. So müssen beispielsweise eine mechanische Antriebseinheit für den Fensterheber und das Türschloß nachträglich montiert werden.

Bei einer Komplettierung einer in Sandwich-Bauweise aufgebauten Fahrzeugtür besteht zwar ohne weiteres die Möglichkeit der Vormontage von Antriebseinheit und Schloß, jedoch besitzen diese Türen den Nachteil einer nur geringen Steifigkeit. Auch die Einpassung der Türen in die Fahrzeugkarosserie kann nur komplett und nach der Lackierung erfolgen. Oft ist die Justage nur mit aufwendigen Scharnieren möglich.

Auch die technische Lösung gemäß der JP-A1 6-17 13 66 stellt eine Fahrzeugtür in Sandwich-Bauweise dar. In ein kastenförmiges Türinnenblech wird eine Trägerplatte mit Führungselementen eines Fensterhebers montiert. Eine nicht selbsttragende Türaußenhaut aus Kunststoff ist in ihrem Randbereich mit dem Türinnenblech verbunden. Nachteilig ist auch hier, daß die Tür nicht im Rohbauzustand justiert werden kann.

Aus der EP-A2 0 286 923 ist eine Fahrzeugtür mit einem großen Ausschnitt im Türinnenblech bekannt, der durch die Trägerplatte eines Moduls vollständig abdeckbar ist. Das Modul trägt eine vormontierte Fensterscheibe, die in seitlichen Führungsschienen geführt ist und mit einem Fensterheber in Verbindung steht. Bei der Montage des Moduls wird zunächst die Fensterscheibe in den Spalt des Brüstungsbereichs der Türkarosserie eingefädelt, wobei die Enden der Führungsschienen des Moduls mit den Zugeordneten Enden der Führungsschienen der Türkarosserie formschlüssig in Eingriff treten müssen. Anschließend wird die Trägerplatte an das Türinnenblech herangeklappt und daran verschraubt.

Diese Lösung besitzt jedoch den Nachteil, daß die Verbindung zwischen den Enden der Führungsschienen verdeckt erfolgen muß, was die Montage schwierig und aufwendig macht. Toleranzen im Abstand zwischen den parallel verlaufenden Führungsschienen können zu unerwünschten mechanischen Verspannungen führen. Darüber hinaus erlaubt diese Konstruktion nicht die Verwendung von Fensterscheiben, die breiter sind als der Ausschnitt im Türinnenblech.

Der Erfindung liegt die Aufgabe zugrunde, eine Fahrzeugtür mit einem auf einer Trägerplatte vormontierten doppelsträngigen Seilfensterheber zu entwickeln, der auch unter eingeschränkten Platzverhältnissen einen großen Scheibenhub gewährleistet, ohne dadurch die Stützfläche des Paddings merklich zu verringern. Darüber hinaus soll die Erfindung einen einfachen und sicheren Montageablauf gewährleisten. Für den Fall, daß auf der Trägerplatte ein vormontiertes Schloß vorgesehen ist, soll dieses ohne zusätzliche Maßnahmen (z.B. Verschiebung auf einer Schiene) plazierbar sein.

Erfindungsgemäß wird die Aufgabe durch die kennzeichnenden Merkmale des Patentanspruchs 1 gelöst. Die Unteransprüche geben Vorzugsvarianten der Erfindung wieder.

Demgemäß liegen die unteren freien Enden der Führungsschienen des doppelsträngigen Seilfensterhebers auf unterschiedlichen Ebenen, so daß sich ihr Abstand von der Türunterkante unterscheidet. Während das untere freie Ende der B-säulenseitigen Führungsschiene den Befestigungsbereich zwischen Türinnenblech und Trägerplatte nicht erreicht (zumindest aber nicht hineinragt), liegt das freie Ende der A-säulenseitigen Führungsschiene in diesem Befestigungsbereich bzw. ragt darüber hinaus. Desweiteren sieht die Erfindung eine in Richtung der A-Säule nach unten geneigt verlaufende und gegenüber der Brüstung der Fahrzeugtür um einen Winkel α geneigte Oberkante des Ausschnittes im Türinnenblech vor. Dieser Neigungswinkel α soll wenigstens so groß sein, daß beim Schwenken der Trägerplatte um einen fiktiven Schwenkpunkt in Richtung der Brüstung das untere freie Ende der A-säulenseitigen Führungsschiene über den Befestigungsbereich gehoben werden kann.

Der Schwenkpunkt der Trägerplatte liegt zwischen der B-säulenseitigen Führungsschiene und der B-Säule, vorzugsweise im B-säulenseitigen oberen Eckbereich der Trägerplatte. Statt eines fiktiven Schwenkpunkts kann auch ein definierter Schwenkpunkt zur Anwendung kommen. So könnte beispielsweise eine schraub- oder steckbare Verbindungsstelle im Befestigungsbereich zwischen Türinnenblech und Trägerplatte den Schwenkpunkt festlegen.

Die Montage der mit dem doppelsträngigen Seilfensterheber versehenen Trägerplatte im Karosseriekörper der Fahrzeugtür erfolgt durch Einfädeln der geneigt verlaufenden oberen Kante des Türinnenblechs in den Zwischenraum zwischen der Trägerplatte und den oberen Bereichen der Führungsschienen, wobei das untere freie Ende der A-säulenseitigen Führungsschiene noch außerhalb des Türkörpers liegt. Anschließend wird die Trägerplatte geschwenkt, vorzugsweise um einen Punkt im Bereich ihrer oberen B-säulenseitigen Ecke. Dabei wird das untere freie Ende der Führungsschiene über den unteren Rand des Ausschnittes im Türinnenblech hinweggehoben und die Trägerplatte kann auch im unteren Bereich an das Türinnenblech heran gekippt werden. Nun kann die Trägerplatte um den besagten Schwenkpunkt eine Schwenkbewegung in entgegengesetzter Richtung ausführen, um die Befestigungsbereiche (Überdeckungsbereiche) von Türinnenblech und Trägerplatte in Übereinstimmung zu bringen. Dabei hintergreift das untere freie Ende der A-säulenseitigen Führungsschiene die Unterkante des Türausschnittes. Es versteht sich von selbst, daß die obere Befestigungsstelle zwischen der A-säulenseitigen Führungsschiene und der Trägerplatte so ausreichend tief angeordnet sein muß, daß der notwendigerweise vorgesehene Schwenkwinkel ausführbar ist.

Durch die Wahl des Schwenkpunktes in dem Bereich der B-säulenseitigen Ecke des Trägerbleches, führt die für die Montage der Trägerplatte notwendige Schwenkbewegung nur zu sehr geringen Relativbewegungen zwischen dem Türinnenblech und der Trägerplatte im Bereich des Paddings. Somit reduziert sich die Paddingauflage nicht bzw. nur unerheblich.

Die beschriebene, in Richtung der A-Säule abfallende und gegenüber der Brüstung geneigt verlaufende Oberkante des Türausschnittes gewährleistet trotz des Schwenkmontageablaufes eine vollständige Abdeckung des Türausschnittes durch die Trägerplatte. So gewährleistet die Erfindung mit einfachen technischen Mitteln auch unter ungünstigen Platzverhältnissen eine hermetische Trennung von Naß- und Trockenraum in der Tür.

Besonders vorteilhaft ist die Erfindung im Zusammenhang mit einer Fahrzeugtür anwendbar, deren Brüstung in Richtung der A-Säule nach unten abfällt. Ebenso vorteilhaft kann auf der Trägerplatte ein Schloß vormontiert sein, ohne daß aufwendige Verschiebemechanismen vorgesehen werden müssen, um das Schloß in seine Endposition zu bringen. Schließlich garantiert der in diesem Bereich vorgesehene Schwenkpunkt, daß auch das Schloß nur unmerkliche Bewegungen während der Montage der Trägerplatte ausführt.

Der durch die Erfindung erreichbare vergleichsweise große Scheibenhub kann noch dadurch vergrößert werden, daß die oberen Enden der Führungsschienen des Seilfensterhebers über die Oberkante der Trägerplatte hinaus verlängert werden.

Nachfolgend wird die Erfindung anhand eines Ausführungsbeispiels und der dargestellten Figur näher erläutert. Es zeigen:
- Figur 1 -: eine Seitenansicht einer Fahrzeugtür mit einer großen Ausnehmung im Türinnenblech;
- Figur 2 -: eine Ansicht einer Trägerplatte mit vormontiertem doppelsträngigen Seilfensterheber und Schloß;
- Figur 3a -: eine Seitenansicht der Fahrzeugtür während der Montage der Trägerplattte, wobei die A--säulenseitige Führungsschiene des Fensterhebers nach oben in den Brüstungsbereich hineingeschwenkt ist;
- Figur 3b -: einen Querschnitt durch die Fahrzeugtür gemäß Figur 3a im Bereich der A-säulenseitigen Führungsschiene zum Ende der ersten Montagephase;
- Figur 3c -: einen Querschnitt durch die Fahrzeugtür gemäß Figur 3a im Bereich der A-säulenseitigen Führungsschiene zum Ende der zweiten Montagephase;
- Figur 3d -: einen Querschnitt durch die Fahrzeugtür gemäß Figur 3a im Bereich der B-säulenseitigen Führungsschiene zum Ende der ersten Montagephase;
- Figur 4a -: eine Seitenansicht der Fahrzeugtür mit einer in ihrer Funktionsposition befindlichen Trägerplatte;
- Figur 4b -: einen Querschnitt durch die Fahrzeugtür gemäß Figur 4a im Bereich der A-säulenseitigen Führungsschiene;
- Figur 4c -: einen Querschnitt durch die Fahrzeugtür gemäß Figur 4a im Bereich der B-säulenseitigen Führungsschiene.

Die Figuren zeigen in prinzipienhafter, schematischer Darstellung das Wesen der Erfindung anhand eines Ausführungsbeispiels. Dabei wurde auf Details, wie z.B. die Darstellung von Seilen bzw. Bowden oder von Antriebseinheiten, die nicht für das Verständnis der Erfindung notwendig sind, verzichtet.

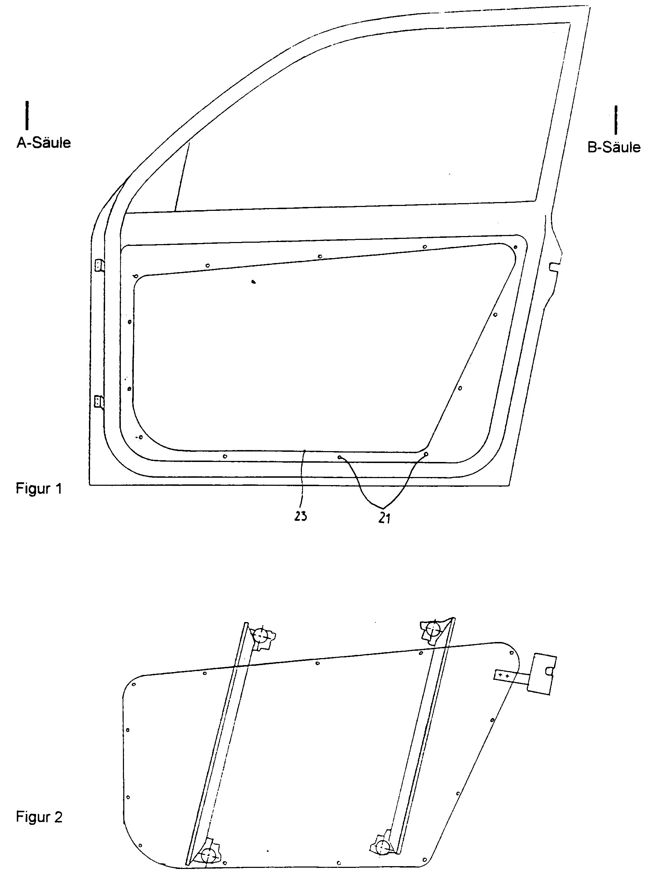

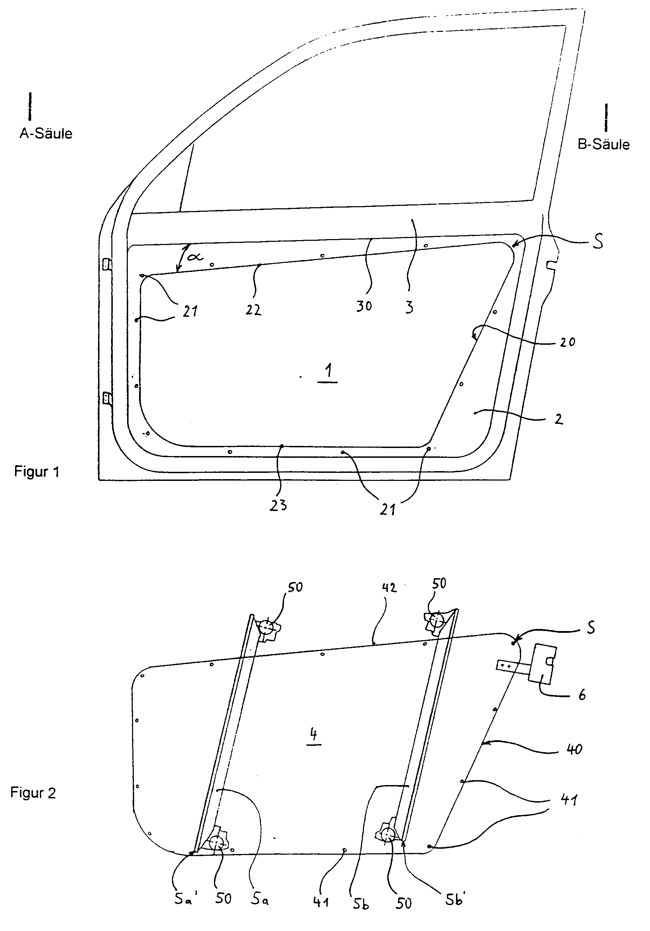

Aus Figur 1 ist eine aus einem Türaußenblech 1 und einem Türinnenblech 2 aufgebaute Fahrzeugtür ersichtlich, deren Türinnenblech 2 einen großen Ausschnitt 20 aufweist. Während die Unterkante 23 des Türausschnittes 20 einen im wesentlichen parallelen Verlauf zur Türunterkante aufweist, verläuft die Oberkante 22 des Türausschnitts 20 bezüglich des Vorsprunges 30 der Brüstung 3 unter einem Winkel α, wobei die Kante 22 in Richtung der A-Säule nach unten abfällt. Im Randbereich des Ausschnittes 20 sind zueinander beabstandete Befestigungsstellen 21 angeordnet. Die im rechten oberen Eckbereich liegende Befestigungsstelle ist gleichzeitig als der für die erfindungsgemäße Montage notwendige Schwenkpunkt vorgesehen.

An dieser Stelle sei darauf hingewiesen, daß der Schwenkpunkt S (nicht wie in diesem Ausführungsbeispiel) unbedingt ein Festpunkt sein muß, er kann sich auch beim freihändigen Schwenken einer nicht fixierten Trägerplatte 4 als ein fiktiver Schwenkpunkt darstellen.

Figur 2 zeigt eine in Form und Größe des Türausschnittes 20 paßfähige Trägerplatte 4. Sie ist in der Lage, den Türausschnitt 20 vollständig abzudecken, wobei eine im Randbereich umlaufende Dichtung 400 für eine gute Abdichtung zwischen dem Türinnenraum (sogenannter Trockenraum) und dem außenliegenden sogenannten Naßraum gewährleistet. Desweiteren sind dargestellt zwei auf der Trägerplatte 4 vormontierte Führungsschienen 5a, 5b eines doppelsträngigen Seilfensterhebers. Deren obere freien Enden ragen über die Oberkante 42 der Trägerplatte 4 wesentlich hinaus. An ihren Enden tragen die Führungsschienen 5a, 5b Rollen 50, über welche das Seil geführt wird. Deutlich zu erkennen ist auch, daß das freie untere Ende 5a' der A-säulenseitigen Führungsschiene 5a in den mit Befestigungsstellen 41 versehenen Befestigungsbereich hineinragt. Hingegen befindet sich das untere freie Ende 5b' der Führungsschiene 5b in einer solchen Position oberhalb des Befestigungsbereichs, daß eine erschwerte Montage in diesem Bereich nicht zu befürchten ist. Zusätzlich zum Fensterheber wurde in dem oberen rechten Eckbereich der Trägerplatte 4 eine Schloßeinheit 6 vormontiert.

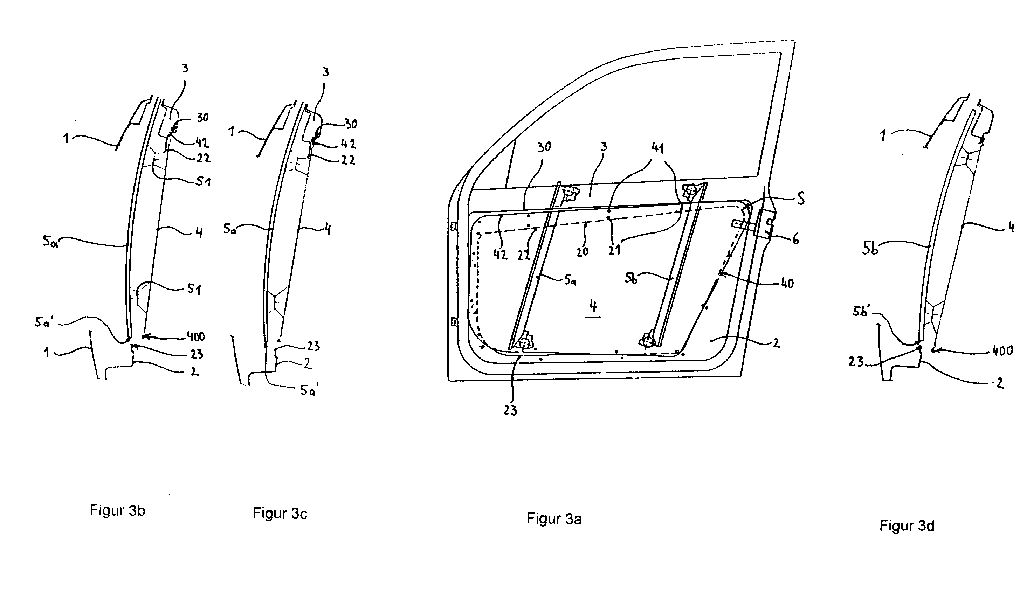

Die Figuren 3a - 3d zeigen verschiedene Phasen der Montage der erfindungsgemäß gestalteten modularen Fahrzeugtür. So ist aus Figur 3a die Seitenansicht der Fahrzeugtür während der Montage der Trägerplatte 4 zu entnehmen. Dabei befindet sich die Trägerplatte 4 annähernd in ihrer obersten Position, wobei ihre Oberkante 42 in unmittelbarer Nähe zum Vorsprung 30 der Brüstung 3 liegt und dazu etwa parallel verläuft. In dieser Position befindet sich das freie untere Ende 5a' der Führungsschiene 5a oberhalb der Unterkante 23 des Türausschnitts 20, so daß ein Heranklappen der Trägerplatte 4 an das Türinnenblech 2 möglich wird.

Figur 3b zeigt den Querschnitt durch die Fahrzeugtür im Bereich der A-säulenseitigen Führungsschiene 5a, nachdem die Führungsschiene 5a tief in den Spalt im Inneren der Brüstung 3 hineingeschoben wurde. Bei der Dimensionierung der Fahrzeugtür ist darauf zu achten, daß in Abhängigkeit des erforderlichen Montagehubes der Trägerplatte 4 in diesem Bereich die Anordnung des oberen Befestigungssteges 51 zwischen der Führungsschiene 5a und der Trägerplatte 4 in einer solchen Höhe gewählt wird, daß dieser Befestigungssteg 51 nicht vor Ausführung des notwendigen Montagehubes mit der Unterkante 23 des Ausschnittes 20 im Türinnenblech kollidiert. Dasselbe gilt sinngemäß auch für die Oberkante 42 der Trägerplatte 4 und den Vorsprung 30 der Brüstung 3.

Figur 3c zeigt die zweite Phase des Montagevorganges, wobei der untere Bereich der Trägerplatte 4 in Richtung auf das Türinnenblech 2 geklappt wird und somit das freie untere Ende 5a' der Führungsschiene 5a im Inneren des Türkörpers zum Liegen kommt.

Aus Figur 3d ist ersichtlich, daß die Trägerplatte 4 im Bereich der B-säulenseitigen Führungsschiene 5b schon nach der ersten Montagephase fast seine ideale Position erreicht hat. Da vertikale Verschiebungen in diesem Bereich nur minimal ausfallen, kann der Befestigungsbereich in unmittelbarer Nähe des Vorsprunges 30 der Brüstung 3 liegen.

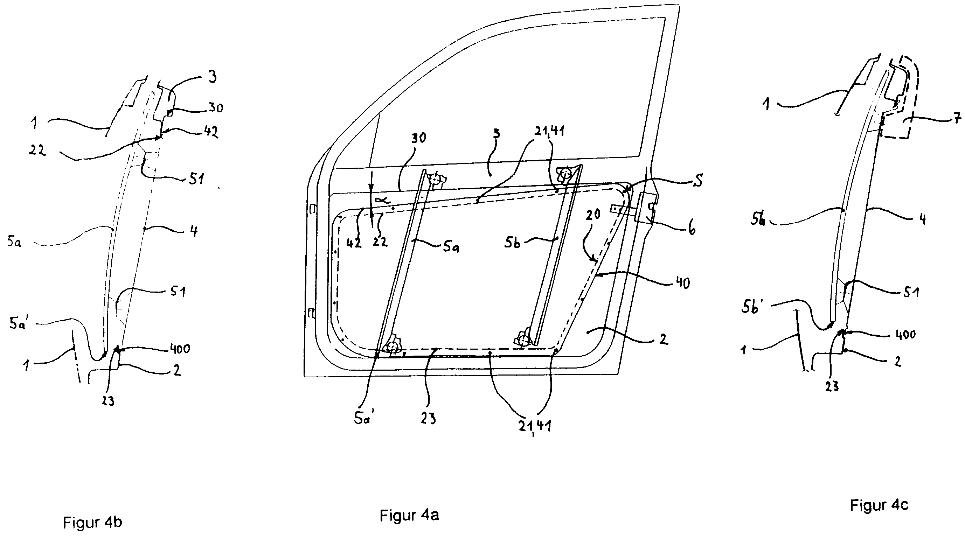

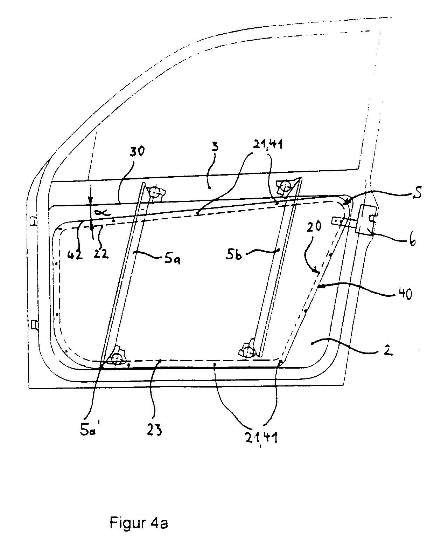

Aus Figur 4a ist eine Seitenansicht der Fahrzeugtür ersichtlich, in der die Trägerplatte 4 bereits ihre Funktionsposition eingenommen hat und somit die umlaufenden Befestigungsbereiche des Türinnenblechs 2 und der Trägerplatte 4 sich in Überdeckung befinden. Diese Funktionsposition wurde ausgehend von der in Figur 3a dargestellten Montageposition durch Schwenken der Trägerplatte 4 um den Schwenkpunkt S erreicht. Dabei taucht wiederum das untere freie Ende 5a' der Führungsschiene 5a in den unteren Befestigungsbereich mit den Befestigungsstellen 21, 41 ein. Insbesondere bei Verwendung eines auf einer Trägerplatte 4 festmontierten Schlosses 6 sollte der Montageschwenkpunkt S möglichst nahe beim Schloß 6 liegen, damit das Schloß in der Türkarrosserie während des Montagevorganges möglichst nur geringe Relativbewegungen ausführen muß.

In Figur 4b ist der Querschnitt der Fahrzeugtür in der Nähe der Führungsschiene 5a dargestellt. Gut zu erkennen ist der im Vergleich zu Figur 4c (Schnittdarstellung im Bereich der B-säulenseitigen Führungsschiene 5b) wesentlich größere Abstand der Oberkante 42 der Trägerplatte 4 zum Vorsprung 30 der Brüstung 3 in der Endposition. Dieser zur Ausführung der Montageschwenkbewegung notwendige Abstand muß bei der Formgebung der Türinnenverkleidung mit berücksichtigt werden. Im Falle der Vormontage eines Paddings 7 auf der Trägerplatte 4 bestehen auf der der B-Säule zugewandten Seite aus den schon genannten Gründen keine oder nur sehr geringe Einschränkungen.

### Bezugszeichenliste

- 1: Türaußenblech
- 2: Türinnenblech
- 20: umlaufende Kontur des Ausschnittes im Türinnenblech
- 21: Befestigungsstelle
- 22: obere Kante des Türausschnittes
- 23: untere Kante des Türausschnittes
- 3: Brüstung
- 30: Vorsprung der Brüstung
- 4: Trägerplatte
- 40: umlaufende äußere Kontur der Trägerplatte
- 41: Befestigungsstelle
- 42: obere Kante der Türinnenplatte
- 400: Dichtung aus elastischem Material
- 5a: A-säulenseitige Führungschiene
- 5a': Unterkante der A-säulenseitigen Führungsschiene
- 5b: B-säulenseitige Führungschiene
- 5b': Unterkante der B-säulenseitigen Führungschiene
- 50: Umlenkrolle
- 51: Befestigungssteg
- 6: Schoß
- 7: Padding
- S: Schwenkpunkt
- α: Winkel (zwischen Oberkante Türausschnitt und Brüstung)

## Patentansprüche

1. Zweischalige Fahrzeugtür mit einem auf einer Trägerplatte (4) vormontierten doppelsträngigen Seilfensterheber (5a, 5b), wobei die Trägerplatte (4) einen im Türinnenblech vorgesehenen Ausschnitt (20) weitestgehend, vorzugsweise vollständig und dichtend abdeckt, wobei im Türinnenraum im Bereich der Brüstung (3) wenigstens ein so breiter Spalt vorhanden ist, daß das A-säulenseitige obere Ende des Seilfensterhebers darin eintauchen kann, und wobei das untere freie Ende (5a') der A-säulenseitigen Führungsschiene (5a) in den durch einen Überdeckungsbereich gebildeten Befestigungsbereich von Türinnenblech und Trägerplatte (4) hinein oder darüber hinaus ragt,
**dadurch gekennzeichnet**,
daß das untere freie Ende (5b') der B-säulenseitigen Führungsschiene (5b) nicht bis in den Befestigungsbereich von Türinnenblech (2) und Trägerplatte (4) hineinragt und daß die Oberkante (22) des Ausschnittes (20) im Türinnenblech (2) bezüglich der Erstreckung der Brüstung (3) um wenigstens einen solchen Winkel (α) in Richtung der A-Säule nach unten geneigt verläuft, daß durch Schwenken der Trägerplatte (4) um einen fiktiven Schwenkpunkt (S) um den Winkel (α) in Richtung der Brüstung (3) das untere freie Ende (5a') der A-säulenseitigen Führungsschiene (5a) über den Befestigungsbereich des Türinnenblechs (2) gehoben werden kann.

2. Fahrzeugtür nach Anspruch 1, **dadurch gekennzeichnet**, daß der Schwenkpunkt (S) zwischen der B-säulenseitigen Führungsschiene (5b) und der B-Säule liegt.

3. Fahrzeugtür nach Anspruch 2, **dadurch gekennzeichnet**, daß der Schwenkpunkt (S) im B-säulenseitigen oberen Eckbereich der Trägerplatte (4) liegt.

4. Fahrzeugtür nach wenigstens einem der voranstehenden Ansprüche, **dadurch gekennzeichnet**, daß der Schwenkpunkt (S) mit einer Verbindungsstelle (21,41) im Befestigungsbereich zwischen Türinnenblech (2) und Trägerplatte (4) übereinstimmt.

5. Fahrzeugtür nach Anspruch 1, **dadurch gekennzeichnet**, daß die Trägerplatte (4) mit einem vormontierten Schloß (6) ausgerüstet ist.

6. Fahrzeugtür nach Anspruch 1, **dadurch gekennzeichnet**, daß die Brüstung (3) in Fahrtrichtung einen nach unten abfallenden Verlauf aufweist.

7. Fahrzeugtür, nach Anspruch 1, **dadurch gekennzeichnet**, daß die oberen freien Enden der Führungsschienen (5a,5b) über die obere Kante (42) der Trägerplatte (4) hinausragen.

## Claims

1. Twin-walled vehicle door with a twin-cable window raiser (5a, 5b) prefitted on a support plate (4) wherein the support plate (4) covers substantially, preferably completely and in sealed manner, a cut-out section (20) provided in the inner door panel wherein in the inside of the door in the area of the window ledge (3) there is at least one gap which is wide enough so that the upper end of the cable window raiser on the A-column side can project therein and wherein the lower free end (5a') of the guide rail (5a) on the A-column side projects in or beyond the fixing area of the inner door panel and the support plate (4) formed by a cover area, characterised in that the lower free end (5b') of the guide rail (5b) on the B-column side does not project into the fixing area of the inner door panel (2) and support plate (4) and that the upper edge (22) of the cut-out section (20) in the inner door panel (2) runs relative to the extension of the ledge (3) downwardly inclined by at least such an angle (α) in the direction of the A-column that by swivelling the support plate (4) about an imaginary swivel point (S) about the angle (α) in the direction of the ledge (3) the lower free end (5a') of the guide rail (5a) on the A-column side can be lifted over the fixing area of the inner door panel (2).

2. Vehicle door according to claim 1 characterised in that the swivel point (S) lies between the guide rail (5b) on the B-column side and the B-column.

3. Vehicle door according to claim 2 characterised in that the swivel point (S) lies in the upper corner area of the support plate (4) on the B-column side.

4. Vehicle door according to at least one of the preceding claims, characterised in that the swivel point (S) coincides with a connecting point (21,41) in the fixing area between the inner door panel (2) and the support plate (4).

5. Vehicle according to claim 1 characterised in that the support plate (4) is provided with a prefitted lock (6).

6. Vehicle door according to claim 1 characterised in that the ledge (3) has in the travel direction a downwardly inclined path.

7. Vehicle door according to claim 1 characterised in that the upper free ends of the guide rails (5a,5b) project over the upper edge (42) of the support plate (4).

## Revendications

1. Portière de véhicule à double cloison avec un remonte-glace à câble double (5a, 5b), prémonté sur une plaque d'appui (4), la plaque d'appui (4) recouvrant la majeure partie, de préférence la totalité et de façon hermétique une découpe (20) prévue dans la tôle interne de la porte, de sorte que dans la zone intérieure de la porte au niveau de l'appui de fenêtre (3) existe au moins un espace libre d'une largeur telle permettant d'introduire l'extrémité supérieure sur le côté de la colonne A du remonte-glace à câble, et de sorte que l'extrémité libre inférieure (5a') de la glissière de guidage côté colonne A (5a) fait saillie à l'intérieur et au-delà dans la zone de fixation formée par une zone de recouvrement de la tôle intérieure de la portière et de la plaque d'appui (4),
caractérisée en ce que
l'extrémité libre inférieure (5b') de la glissière de guidage (5b) sur le côté de la colonne B n'atteint pas la zone de fixation de la tôle intérieure de porte (2) et de la plaque d'appui (4) et en ce que le bord supérieur (22) de la découpe (20) dans la tôle intérieure de porte (2) s'étend par rapport à l'extension de l'appui de fenêtre (3) sur au moins un angle (α) tel que, dans la direction de la colonne A en inclinaison vers le bas, par basculement de la plaque d'appui (4) autour d'un point de basculement (S) fictif autour de l'angle (α) en direction de l'appui de fenêtre (3), l'extrémité libre inférieure (5a') de la glissière de guidage (5a) sur le côté de la colonne A peut être relevée au-dessus de la zone de fixation de la tôle intérieure de portière (2).

2. Portière de véhicule selon la revendication 1, caractérisée en ce que le point d'appui (S) se situe entre la glissière de guidage (5b) côté colonne B et la colonne B.

3. Portière de véhicule selon la revendication 2, caractérisée en ce que le point de basculement (S) se situe dans le coin supérieur côté colonne B de la plaque d'appui (4).

4. Portière de véhicule selon au moins l'une des revendications précédentes, caractérisée en ce que le point de basculement (S) coïncide avec un point de raccordement (21, 41) dans la zone de fixation entre la tôle intérieure de portière (2) et la plaque d'appui (4).

5. Portière de véhicule selon la revendication 1, caractérisée en ce que la plaque d'appui (4) est munie d'une serrure (6) prémontée.

6. Portière de véhicule selon la revendication 1, caractérisée en ce que dans le sens de la marche, l'appui de fenêtre (3) présente un profil allant vers le bas.

7. Portière de véhicule selon la revendication 1, caractérisée en ce que les extrémités libres supérieures des glissières de guidage (5a, 5b) font saillie au-dessus du bord supérieur (42) de la plaque d'appui (4).
